(19) Europäisches Patentamt
European Patent Office
Office européen des brevets

(11) **EP 4 601 335 A1**

(12) **EUROPEAN PATENT APPLICATION**
published in accordance with Art. 153(4) EPC

(43) Date of publication:
**13.08.2025 Bulletin 2025/33**

(21) Application number: **23876553.1**

(22) Date of filing: **28.09.2023**

(51) International Patent Classification (IPC):
**H04W 4/40** (2018.01)

(52) Cooperative Patent Classification (CPC):
**G07C 5/08; H04W 4/02; H04W 4/40;** Y02D 30/70

(86) International application number:
**PCT/CN2023/122376**

(87) International publication number:
**WO 2024/078350 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.10.2022 CN 202211227210**

(71) Applicant: Tsingcar (Beijing) Technology Co., Ltd.
**Daxing District@Beijing 100176 (CN)**

(72) Inventors:
• **ZHAO, Ruixiang**
  **Beijing Pilot Free Trade Zone)**
  **Daxing District**
  **Beijing 100176 (CN)**

• **YIN, Zuobiao**
  **Beijing Pilot Free Trade Zone) Daxing District**
  **Beijing 100176 (CN)**
• **ZHANG, Xiyang**
  **Beijing Pilot Free Trade Zone) Daxing District**
  **Beijing 100176 (CN)**

(74) Representative: **Chung, Hoi Kan**
  **Mandarin IP Limited**
  **7 Cherry Trees**
  **Great Shelford**
  **Cambridge CB22 5XA (GB)**

(54) **WIRELESS SIGNAL-BASED VEHICLE SENSING METHOD AND APPARATUS, MEDIUM AND DEVICE**

(57) The present application relates to the technical field of wireless communication, and discloses a wireless signal-based vehicle sensing method and apparatus, a storage medium and an electronic device. The method comprises: on the basis of multiple sending ends continuously transmitting wireless signals to multiple receiving ends, continuously acquiring wireless signal information of the multiple receiving ends; according to the wireless signal information of the receiving ends, determining whether a person or object is moving around a vehicle; if there is a person or object moving around the vehicle, executing a corresponding vehicle monitoring or risk early warning function. By means of the present method, vehicle sensing may be carried out in a mode having a relatively low system resource occupancy rate.

Continuously acquire wireless signal information at multiple receiving ends on a premise that multiple sending ends continuously transmit wireless signals to the multiple receiving ends at a predetermined time — S10

Determine, according to the wireless signal information at the receiving ends, whether there is movement of a person or object around a vehicle — S20

Execute a corresponding vehicle monitoring or risk early warning function if determined that there is movement of a person or object around the vehicle — S30

Fig. 2

**Description**

The present application claims the priority of Chinese patent application entitled "WIRELESS SIGNAL-BASED VEHICLE SENSING METHOD AND DEVICE, MEDIUM AND ELECTRIC DEVICE " filed on October 9, 2022, the entire contents of which are hereby incorporated by reference.

TECHNICAL FIELD

The present application relates to the technical field of wireless communications, and in particular, to a wireless signal-based vehicle sensing method and device, a medium, and an electric device.

BACKGROUND

The vehicle sensing mainly comprises environment perception, vehicle body perception and the like. According to the conditions outside of the vehicle, information about nearby vehicles, pedestrians, obstacles or the like is obtained, and the information is called environment perception.

At present, vehicle sensing is mainly applied to the field of artificial intelligence driving, and when a vehicle is moving, information about surrounding people, buildings, signal lamps and the like is obtained through a vehicle-mounted camera and the like. As the vehicle stops driving, due to the fact that the vehicle sensing function occupies relatively large system resources, the vehicle sensing function is closed. However, in real life, when stopping and being in a parking lot or other place, a vehicle may occasionally be scratched, slashed, or have its windows broken to steal items. Since the vehicle sensing function is disabled in such situations, it becomes impossible to detect these incidents in real time or retain relevant evidence.

Currently, when a vehicle is stationary, vibrations or similar events are detected by sensors, which then activate the dashcam function. However, this approach neither enables proactive recording for evidence collection nor prevents vehicle damage. Therefore, a critical technical challenge is how to activate vehicle sensing while the vehicle is stationary in a manner that minimizes system resource consumption and, upon detecting an abnormal situation, achieving preemptive recording for evidence collection or risk warning.

SUMMARY

The embodiments of the present disclosure provide a wireless signal-based vehicle sensing method and device, a medium, and an electronic device, and aims to solve the technical problem of how to perform vehicle sensing when the vehicle is stationary.

In a first aspect, a wireless signal-based vehicle sensing method is provided, comprising: continuously acquiring wireless signal information at a plurality of receiving ends on a premise that a plurality of sending ends continuously transmit wireless signals to the plurality of receiving ends at a predetermined time; determining, according to the wireless signal information at the receiving ends, whether there is movement of a person or object around a vehicle; and executing a corresponding vehicle monitoring or risk early warning function if determined that there is movement of a person or object around the vehicle.

In one embodiment, after the determining, according to the wireless signal information at the receiving ends, whether there is movement of a person or object around a vehicle, the method further comprises: automatically initiating the vehicle image capture function, and acquiring image information around the vehicle if it is determined that there is movement of a person or object around the vehicle; and determining, according to the image information around the vehicle, whether the movement is caused by a person or an object.

In one embodiment, after the determining, according to the image information around the vehicle, whether the movement is caused by a person or an object, the method further comprises: acquiring pre-stored photo information of a vehicle owner if it is determined that a person is moving around the vehicle; and determining, according to the vehicle owner photo information and the image information around the vehicle, whether the vehicle owner is approaching the vehicle.

In one embodiment, after the determining, according to the vehicle owner photo information and the image information around the vehicle, whether the vehicle owner is approaching the vehicle, the method further comprises: activating a vehicle system preheating function if it is determined that the vehicle owner is approaching the vehicle, wherein the vehicle system preheating function comprises a vehicle self-check function or a vehicle welcome function.

In one embodiment, the executing a corresponding vehicle monitoring function comprises: automatically activating a dashcam, and recording the movement of a person or object around the vehicle; and automatically turning off the dashcam and stopping the recording after determining, according to the wireless signal information at the receiving ends, that no person or object moves around the vehicle.

In one embodiment, the wireless signal is an ultra-wideband (UWB) wireless signal for accurately and efficiently determining whether there is movement of a person or object around the vehicle.

In a second aspect, a wireless signal-based vehicle sensing device is provided, comprising: a wireless signal information acquisition module configured to continuously acquire wireless signal information at a plurality of receiving ends on a premise that a plurality of sending ends continuously transmit wireless signals to the plurality of receiving ends at a predetermined time; a movement detection module configured to determine, according to the wireless signal information at the receiving ends, whether there is movement of a person or object around a vehicle; and an execution function module configured to execute a corresponding vehicle monitoring or risk early warning function if determined that there is movement of a person or object around the vehicle.

In one embodiment, the movement detection module is configured to: determine whether the wireless signal information at one or more receiving ends arrives earlier or later than expected; and determine that there is movement of a person or object around the vehicle if there is wireless signal information at one or more receiving ends arrives earlier or later than expected.

In one embodiment, the movement detection module is further configured to: automatically activate a vehicle image capture function, and acquiring image information around the vehicle if it is determined that there is movement of a person or object around the vehicle; and determine, according to the image information around the vehicle, whether the movement is caused by a person or an object.

In one embodiment, the movement detection module is further configured to: acquire pre-stored photo information of a vehicle owner if it is determined that a person is moving around the vehicle; and determine, according to the vehicle owner photo information and the image information around the vehicle, whether the vehicle owner is approaching the vehicle.

In one embodiment, the wireless signal-based vehicle sensing device further comprises a vehicle system preheating module, configured to: activate a vehicle system preheating function if it is determined that the vehicle owner is approaching the vehicle, wherein the vehicle system preheating function comprises a vehicle self-check function or a vehicle welcome function.

In one embodiment, the execution function module is configured to: automatically activate a dashcam, and recording the movement of a person or object around the vehicle; and automatically turn off the dashcam and stopping the recording after determining, according to the wireless signal information at the receiving ends, that no person or object moves around the vehicle.

According to a third aspect, a computer readable storage medium is provided, the computer readable storage medium stores a computer program, and when the computer program is executed by the processor, the steps of the vehicle sensing method are implemented.

In a fourth aspect, an electronic device is provided, comprising a memory, a processor, and a computer program stored in the memory and executable on the processor, wherein when the processor executes the computer program, the steps of the vehicle sensing method are implemented.

The wireless signal-based vehicle sensing method and device, the storage medium, and the electronic device described above operate on the premise that multiple transmitting ends continuously transmit wireless signals to multiple receiving ends at a predetermined time. The system continuously acquires wireless signal information from multiple receiving ends and determines whether there is movement of a person or an object around the vehicle based on the received wireless signal information. If movement is detected, the corresponding vehicle monitoring or risk warning function is executed. The present application enables vehicle sensing while the vehicle is stationary with minimal system resource consumption. In the event of an abnormal situation, it allows for preemptive recording for evidence collection or risk warning, thereby improving vehicle monitoring efficiency and emergency response capabilities. Additionally, based on the detection of a person or object approaching the vehicle, the present application utilizes pre-stored owner photo information and surrounding vehicle images to anticipate when the owner intends to drive. This enables the timely activation of the vehicle system's preheating function, further enhancing the intelligent driving experience.

BRIEF DESCRIPTION OF DRAWINGS

In order to more clearly illustrate the technical solutions of the embodiments of the present application, the drawings in the description of the embodiments of the present application will be briefly described below. It is obvious that the drawings in the following description show merely some embodiments of the present application. For a person of ordinary skill in the art, other drawings may be obtained according to these drawings without creative efforts.

FIG. 1 is a schematic diagram of an application environment of a wireless signal-based vehicle sensing method according to an embodiment of the present application;
FIG. 2 is a schematic flowchart of the wireless signal-based vehicle sensing method according to an embodiment of the present application;

FIG. 3 is a schematic flowchart of a specific embodiment of step S20 in FIG. 2;
FIG. 4 is a schematic diagram of a specific embodiment of step S20 in FIG. 2;
FIG. 5 is a schematic flowchart of a specific embodiment of step S30 in FIG. 2;
FIG. 6 is a schematic structural diagram of a wireless signal-based vehicle sensing device according to an embodiment of the present application; and
FIG. 7 is a schematic structural diagram of a computer device according to an embodiment of the present application.

DETAILED DESCRIPTION OF THE EMBODIMENTS

The technical solutions in the embodiments of the present application will be clearly and completely described below with reference to the accompanying drawings in the embodiments of the present application. All other embodiments obtained by a person of ordinary skill in the art based on the embodiments of the present application without creative efforts shall fall within the protection scope of the present application.

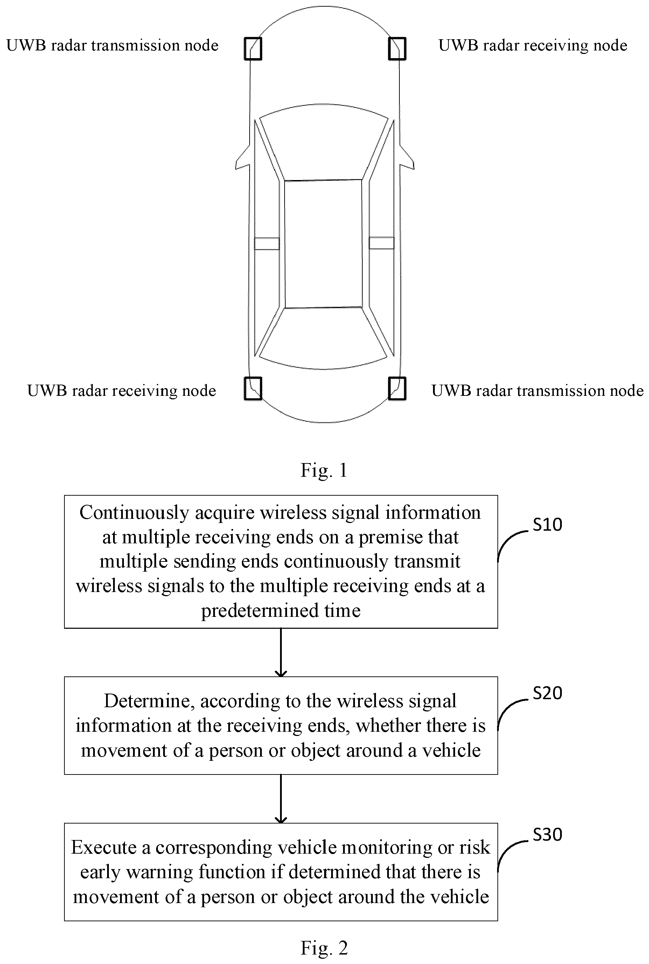

The wireless signal-based vehicle sensing method according to the embodiments of the invention can be applied to the application environment shown in FIG. 1, wherein a UWB (Ultra Wideband) sender is installed at the left end of the vehicle head, and a UWB receiver is installed at the right end of the vehicle head. Further, a UWB receiver is installed at the left end of the vehicle tail, and a UWB sender is installed at the right end of the vehicle tail. At a certain fixed time period, the two UWB transmitting ends continuously transmit UWB signals to the two UWB receiving ends. In additional, UWB signal information of the two UWB receiving ends is continuously obtained. When it is detected according to the UWB signal information that a person or object is moving around the vehicle, the function of the dashcam can be automatically started to record the movement of the person or object around the vehicle, that is, the vehicle monitoring function is executed; and o the reminding message can be sent to the mobile phone end of the vehicle owner, that is, the vehicle risk early warning function is executed.

The wireless signal-based vehicle sensing method mentioned above enables vehicle sensing when the vehicle is stationary with relatively low system resource occupancy, thereby improving vehicle monitoring efficiency and emergency response capability in abnormal situations. This wireless signal-based vehicle sensing method can be applied to an automotive central control system, which controls the activation and deactivation of the dashcam function and the transmission of risk warning messages. The following provides a detailed description of this invention through specific embodiments.

Referring to FIG. 2, which is a flow diagram of a wireless signal-based vehicle sensing method in an embodiment of the present application. As shown in Figure 2, the method includes the following steps S11 to S30.

In step S10, based on the premise that multiple transmitting ends continuously transmit wireless signals to multiple receiving ends within a predetermined time, the wireless signal information of the multiple receiving ends is continuously acquired.

In the embodiments of the present application, the transmitting end continuously transmits wireless signals to the receiving end within a predetermined time. The predetermined time is set by the vehicle owner and can be, for example, one or two hours since the vehicle stops moving. The vehicle owner can customize the transmission period of the wireless signals based on the parking duration. For instance, if the owner parks the vehicle in a parking lot after returning home in the evening and plans to use it the next morning, the predetermined time can be set from 7:00 PM to 7:00 AM the next day. If the vehicle owner only makes a short stop at a location, the predetermined time can be set to half an hour or one hour accordingly. Further, the number and placement of transmitting ends and receiving ends may vary depending on the vehicle model and size, and the present application does not impose any limitations in this regard. Optionally, in the embodiments of the present application, the number and placement of transmitting ends and receiving ends can follow the arrangement shown in FIG. 1. In this arrangement, a transmitting end is installed on the left front end of the vehicle, and a receiving end is installed on the right front end. Additionally, a receiving end is installed on the left rear end of the vehicle, and a transmitting end is installed on the right rear end. With this setup, the system can detect the movement of people or vehicles in any direction around the vehicle.

In step S20, it is determined, based on the wireless signal information received by the receiving ends, whether there is movement of a person or object around the vehicle.

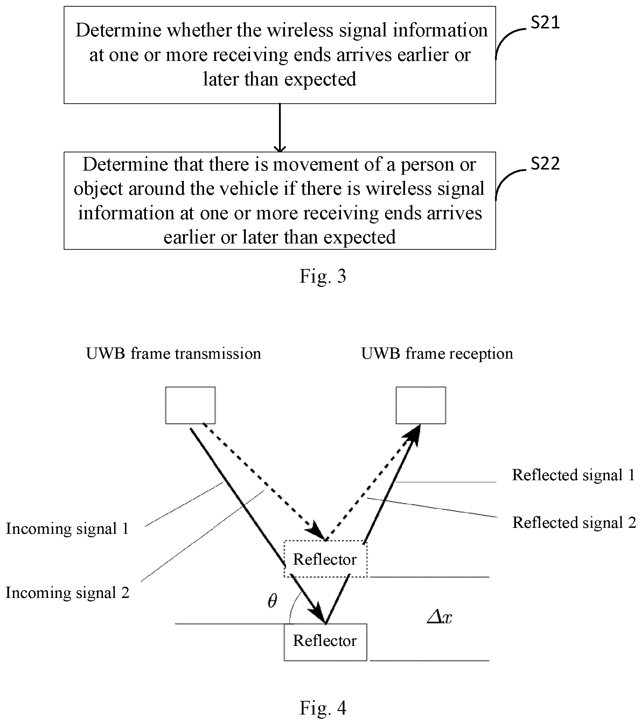

Referring to FIG. 3, which is a flow diagram of a specific implementation of step S20 in FIG. 2. As shown in FIG. 3, the process mainly includes steps S21 to S22.

In step S21, it is determined whether the wireless signal information of one or more receiving ends arrives at the receiving ends earlier or later than expected.

In step S22, if the wireless signal information of one or more receiving ends arrives earlier or later than expected, it is determined that there is movement of a person or object around the vehicle.

When there is no movement of a person or object around the vehicle, the time differences between multiple wireless signals received by the receiving end remain constant and unchanged. However, when there is movement of a person or object around the vehicle, the time differences between multiple wireless signals received by the receiving end will vary. Referring to FIG. 4, which is a schematic diagram of a specific embodiment of step S20 in FIG. 2.

Taking two continuous reflection signals as an example, assuming that the value of the reflection signal 1 is $S_1 = A_1 e^{i*\varphi_1}$, $S_1$ is a complex number, the amplitude $A_1$ represents the intensity of the reflection signal, and the angle $\varphi_1$ represents the phase of the reflection signal. When the reflector changes, for example, the reflector slightly moves to the radar direction, the reflected signal is changed into $S_2 = A_2 e^{i*\varphi_2}$. Since the reflector does not move a large distance in a very short time, the intensity change of the reflected signal is relatively small, and the reflected signal is mainly the change of the phase. For example, the reflector moves at a distance of $\Delta x$ to the radar direction, where $\Delta x$ is small, the specific wavelength is much smaller. When the carrier is 8 GHz, the typical value of the wavelength is 4 cm, and $\Delta x$ is less than 1 cm. Compared with a reflection signal 1, the reflection signal 2 reaches the receiving end in advance, the advance distance is $\Delta l = 2\Delta x * \sin\theta$, the phase of the reflection signal 2 is ahead of the phase of the reflection signal 1, and the advance amplitude is

that $$\Delta\varphi = \varphi_2 - \varphi_1 = -2\pi * \frac{\Delta l}{\lambda} = -2\pi * \frac{2\Delta x}{\lambda} = -2\pi * \frac{2\Delta x}{\lambda}\sin\theta$$ . If the sending interval of the sending

end is $\Delta t$, the angular frequency of the signal change is $$\omega_r = \frac{\Delta\varphi}{\Delta t} = -2\pi * \frac{2\sin\theta}{\lambda} * \frac{\Delta x}{\Delta t} = -2\pi * \frac{2\sin\theta}{\lambda} * v$$ ,

wherein $$v = -\frac{\omega_r * \lambda}{2\pi * 2\sin\theta}$$ and V are the speed of the reflector and move towards the radar to be positive. Therefore, the speed of the reflector can be obtained according to the angular frequency of the reflected signal change.

Similarly, when the reflecting object moves slightly away from the radar's direction, the reflected signal 2 will be delayed compared to reflected signal 1 when it reaches the receiving end. Therefore, by analyzing the wireless signal information received by the receiving end, it is possible to determine whether there is movement of people or objects around the vehicle.

In one embodiment, to further determine whether it is the movement of a person or an object, after determining whether there is movement of a person or an object around the vehicle based on the wireless signal information received by the receiving end, the process further includes steps A1 to A2.

In step A1, if it is determined that there is movement of a person or object around the vehicle, the vehicle image capture function is automatically activated, and surrounding image information is collected.

In step A2, it is determined, based on the surrounding image information, whether the movement is caused by a person or an object.

For example, when it is determined that there is movement of a person or object around the vehicle based on the wireless signal information received by the receiving end, the in-vehicle camera is activated to capture surrounding image information. Then, relevant feature information is extracted from the surrounding image information to determine if there are any human-related features. If no human-related features are found, it is determined that an object is moving. If human-related features are present, it is determined that a person is moving.

In one embodiment, when it is determined that there is movement of a person around the vehicle, the system can preemptively detect that the vehicle owner is preparing to drive by comparing the stored photos of the vehicle owner with the surrounding vehicle image. This process specifically includes steps B1 to B2.

In step B1, if it is determined that there is movement of a person, the system retrieves the stored photo information of the vehicle owner.

In step B2, based on the vehicle owner's photo information and the surrounding vehicle image information, it is determined whether the vehicle owner is approaching the vehicle.

For example, the vehicle owner's profile photo is stored is pre-stored in the automobile central control system. The extracted human feature information from the previous step is compared with the vehicle owner's profile photo. When the match ratio reaches a certain threshold, such as 95% or higher, it is determined that the vehicle owner is approaching the vehicle.

In one embodiment, to further enhance the intelligent driving user experience, after determining whether the vehicle owner is approaching the vehicle based on the owner's photo information and surrounding vehicle image information, the process also includes: if it is determined that the vehicle owner is approaching the vehicle, the vehicle's system preheating function is activated. The vehicle system preheating function includes the vehicle self-check function or the vehicle welcoming function. Vehicle self-check refers to when the vehicle starts, the on-board computer checks if certain functions and car components are functioning properly. If there is any problem, a warning light is displayed. The vehicle welcoming function involves installing lights around the vehicle, such as at the bottom or on the side mirrors, to greet the driver and enhance the user's driving experience.

In step S30, if there is movement of a person or object around the vehicle, the corresponding vehicle monitoring or risk warning function is executed.

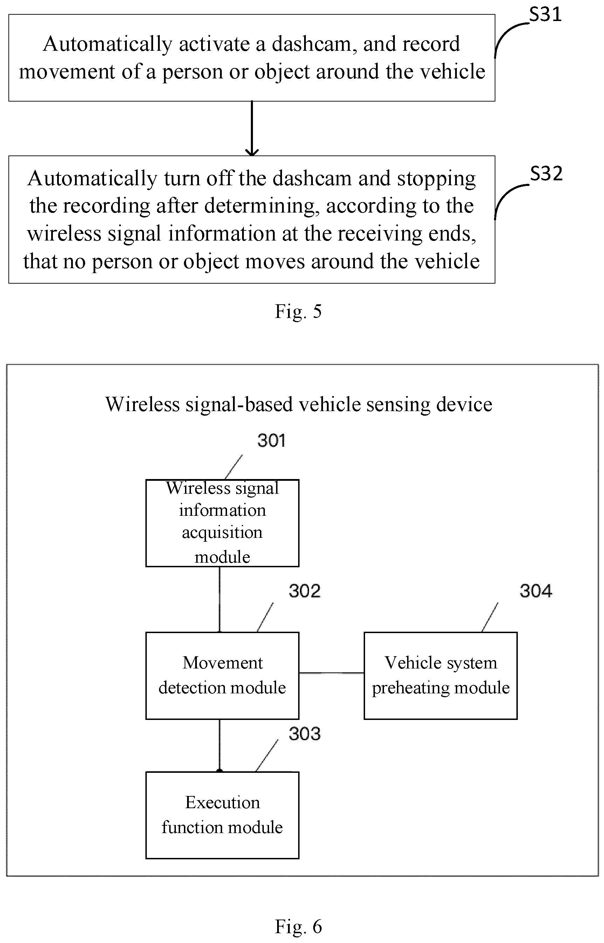

Referring to FIG. 5, which is a flowchart of a specific implementation of step S30 in FIG. 2. The execution of the corresponding vehicle monitoring function mainly includes steps S31 to S32.

In step S31, the dashcam function is automatically activated to record the process of movement of people or objects around the vehicle.

In step S32, when it is determined, based on the wireless signal information received by the receiving end, that there is no movement of person or object around the vehicle, the dashcam function is automatically turned off, and recording is stopped.

The dashcam function in a vehicle is typically used to record the driving process of the vehicle, providing evidence for future dispute resolution if necessary. Similarly, when the vehicle is stationary in places like parking lots, non-normal situations such as vehicle scrapes, scratches by others, or break-ins and theft of items inside the vehicle may occasionally occur. To promptly preserve on-site evidence, the dashcam function can be used for vehicle monitoring when the vehicle perceives relevant risks. It should be noted that if the dashcam remains constantly on, it will consume a significant amount of system resources. Therefore, the dashcam's activation can be decided based on the dynamic situation around the vehicle. For example, when movement of people or objects around the vehicle is detected, the dashcam is automatically activated. When it is determined, based on the wireless signal information from the receiving end, that there is no movement of people or objects around the vehicle, the dashcam function is automatically turned off. This approach further improves the efficiency of vehicle monitoring.

In addition, when it is determined that there is movement of person or object around the vehicle, the vehicle's risk warning function can also promptly notify the vehicle owner of the risk message. On one hand, a reminder message can be sent to the vehicle owner's mobile app via the vehicle's central control system. On the other hand, an alert can be issued through methods like honking the horn.

In one embodiment, the wireless signal can be a UWB (Ultra-Wideband) signal. UWB ultra-wideband wireless communication technology is a type of wireless carrier communication technology that uses a frequency bandwidth of over 1 GHz, transmitting data using nanosecond non-sinusoidal narrow pulses. It offers high data transfer rates, strong resistance to multipath interference, low power consumption, low cost, strong penetration, and low interception rates, enabling more accurate and efficient determination of movement of people or objects around the vehicle. At the same time, the wireless signal can also be a microwave signal, which uses electromagnetic waves in the range of 300 MHz to 300 GHz for wireless communication. This application does not impose restrictions on this.

As can be seen, in the embodiments of the present application, under the premise that multiple transmitting ends continuously transmit wireless signals to multiple receiving ends within a predetermined time, wireless signal information from the multiple receiving ends is continuously obtained. Based on the wireless signal information received by the receiving ends, it is determined whether there is movement of person or object around the vehicle. When movement of person or object is detected, the corresponding vehicle monitoring or risk warning function is executed, thereby further improving the efficiency of vehicle monitoring and the emergency capability when encountering abnormal situations. Further, under the premise of a person or object approaching the vehicle, the system can proactively detect that the vehicle owner is preparing to drive by comparing stored photo information of the owner with surrounding vehicle images, and it can timely activate the vehicle system preheating function, thus enhancing the user experience of intelligent driving.

It should be understood that the numbering of the steps in the above embodiments does not imply a specific execution order. The execution sequence of process should be determined based on its functionality and internal logic, and should not impose any limitations on the implementation process of the embodiments of this application. Furthermore, the terms "comprising" and its variants should be interpreted as open-ended terms meaning "including but not limited to."

In one embodiment, the invention provides a wireless signal-based vehicle sensing device. The sensing device is in one-to-one correspondence with the vehicle sensing method in the embodiments. As shown in FIG. 6, the sensing device comprises a wireless signal information acquisition module 301, a movement detection module 302, an execution function module 303 and a vehicle system preheating module 304, which are described in detail as follows.

The wireless signal information acquisition module 301is configured to continuously acquire wireless signal information at a plurality of receiving ends on a premise that a plurality of sending ends continuously transmit wireless signals to the plurality of receiving ends at a predetermined time.

The movement detection module 302 is configured to determine, according to the wireless signal information at the receiving ends, whether there is movement of a person or object around a vehicle.

The execution function module 303 is configured to execute a corresponding vehicle monitoring or risk early warning function if determined that there is movement of a person or object around the vehicle.

The vehicle system preheating module 304 is configured to: activate a vehicle system preheating function if it is determined that the vehicle owner is approaching the vehicle, wherein the vehicle system preheating function comprises a vehicle self-check function or a vehicle welcome function.

In one embodiment, the movement detection module 302 is further configured to: the movement detection module is configured to: determine whether the wireless signal information at one or more receiving ends arrives earlier or later than expected; and determine that there is movement of a person or object around the vehicle if there is wireless signal information at one or more receiving ends arrives earlier or later than expected.

In one embodiment, the movement detection module 302 is further configured to: automatically activate a vehicle image capture function, and acquiring image information around the vehicle if it is determined that there is movement of a person or object around the vehicle; and determine, according to the image information around the vehicle, whether the movement is caused by a person or an object.

In one embodiment, the movement detection module 302 is further configured to: acquire pre-stored photo information of a vehicle owner if it is determined that a person is moving around the vehicle; and determine, according to the vehicle owner photo information and the image information around the vehicle, whether the vehicle owner is approaching the vehicle.

In one embodiment, the execution function module 303 is configured to: automatically activate a dashcam, and recording the movement of a person or object around the vehicle; and automatically turn off the dashcam and stopping the recording after determining, according to the wireless signal information at the receiving ends, that no person or object moves around the vehicle.

In one embodiment, the wireless signal in the wireless signal information acquisition module 301 and the movement detection module 302 is a UWB ultra-wideband wireless signal, and is used for accurately and efficiently determining whether there is movement of people or objects around the vehicle.

The present application provides a wireless signal-based vehicle sensing device. Under the premise that multiple transmitting ends continuously emit wireless signals to multiple receiving ends within a predetermined time, the system continuously obtains wireless signal information from the receiving ends and, based on this information, determines whether there is movement of person or object around the vehicle. When movement of person or object is detected, the corresponding vehicle monitoring or risk warning function is executed. This application allows for vehicle sensing with relatively low system resource consumption, improving the efficiency of vehicle monitoring and the emergency capability when encountering abnormal situations. Further, under the premise of a person or object approaching the vehicle, the system can proactively detect that the vehicle owner is preparing to drive by comparing stored photo information of the owner with surrounding vehicle images, and it can promptly activate the vehicle system preheating function, further enhancing the user experience of intelligent driving.

For the specific definition of the vehicle sensing device, reference can be made to the definition of the vehicle sensing method I, and details are not described herein again. All or part of the modules in the vehicle sensing device can be implemented entirely or partially through software, hardware, or a combination of both. These modules can be embedded in hardware form within or independently in the processor of a computer device, or they can be stored in software form in the memory of the computer device for the processor to call and execute the operations corresponding to the modules.

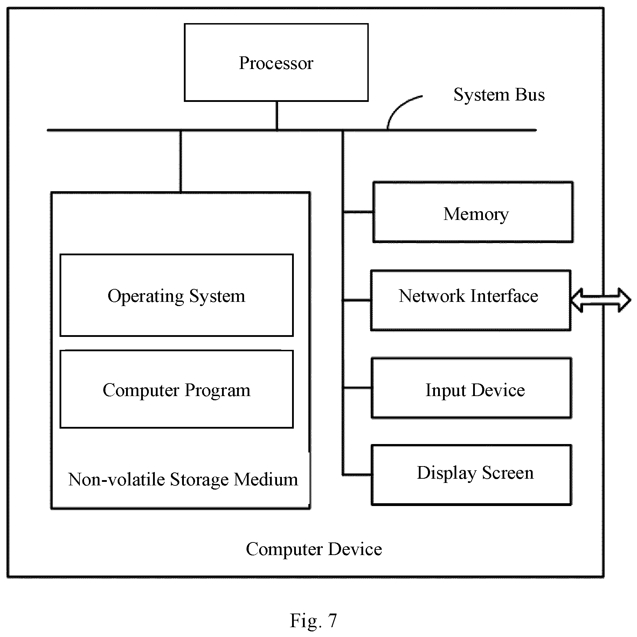

In one embodiment, a computer device is provided, and its internal structure diagram is shown in FIG. 7. The computer device includes a processor, a memory, a network interface, a display, and an input device, all connected through a system bus. The processor of the computer device is responsible for providing computing and control capabilities. The memory of the computer device includes non-volatile storage media and a memory module. The non-volatile storage media stores an operating system and computer programs. The memory module provides an environment for running the operating system and computer programs stored in the non-volatile storage media. The network interface of the computer device is used for communication with an external server via a network. When the computer program is executed by the processor, it implements the functionality or steps of the vehicle sensing method.

In one embodiment, a computer device is provided, including a memory, a processor, and a computer program stored in the memory that can be executed by the processor. When the processor executes the computer program, the following steps are implemented: continuously acquiring wireless signal information at a plurality of receiving ends on a premise that a plurality of sending ends continuously transmit wireless signals to the plurality of receiving ends at a predetermined time; determining, according to the wireless signal information at the receiving ends, whether there is movement of a person or object around a vehicle; and executing a corresponding vehicle monitoring or risk early warning function if determined that there is movement of a person or object around the vehicle.

In one embodiment, a computer-readable storage medium is provided, storing a computer program. When the computer program is executed by a processor, the following steps are implemented: continuously acquiring wireless signal information at a plurality of receiving ends on a premise that a plurality of sending ends continuously transmit wireless signals to the plurality of receiving ends at a predetermined time; determining, according to the wireless signal information at the receiving ends, whether there is movement of a person or object around a vehicle; and executing a corresponding vehicle monitoring or risk early warning function if determined that there is movement of a person or object around the vehicle.

It should be noted that the functions or steps that can be implemented by the aforementioned computer-readable storage medium or computer device can be referenced in the related descriptions of the method embodiments mentioned earlier. To avoid repetition, these will not be described again here.

Those skilled in the art will understand that the full or partial processes in the embodiments of the methods described above can be completed by instructing the relevant hardware through a computer program. The computer program can be stored in a non-volatile, computer-readable storage medium, and when executed, it may include the processes of the various method embodiments described above. Additionally, any reference to memory, storage, databases, or other media used in the embodiments provided in this application can include both non-volatile and/or volatile memory. Non-volatile memory may include read-only memory (ROM), programmable ROM (PROM), electrically programmable ROM (EPROM), electrically erasable programmable ROM (EEPROM), or flash memory. Volatile memory may include random access memory (RAM) or external high-speed cache memory. For illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), synchronous link DRAM (SLDRAM), Rambus direct RAM (RDRAM), direct memory bus dynamic RAM (DRDRAM), and memory bus dynamic RAM (RDRAM).

Those skilled in the art will clearly understand that, for the sake of convenience and simplicity in description, only the division of the functional units and modules has been provided as an example. In practical applications, these functions may be assigned to different functional units or modules as needed. That is, the internal structure of the device can be divided into different functional units or modules to complete all or part of the functions described above.

The embodiments described above are provided only to illustrate the technical solutions of this application and are not intended to limit them. Although the present application has been described in detail with reference to the foregoing embodiments, those skilled in the art should understand that modifications can still be made to the technical solutions described in these embodiments or some technical features can be equivalently replaced. These modifications or replacements do not depart from the spirit and scope of the technical solutions of the embodiments of this application and should be included within the protection scope of this application.

## Claims

1. A wireless signal-based vehicle sensing method, comprising:

   continuously acquiring wireless signal information at a plurality of receiving ends on a premise that a plurality of sending ends continuously transmit wireless signals to the plurality of receiving ends at a predetermined time;
   determining, according to the wireless signal information at the receiving ends, whether there is movement of a person or object around a vehicle; and
   executing a corresponding vehicle monitoring or risk early warning function if determined that there is movement of a person or object around the vehicle.

2. The method according to claim 1, wherein the determining, according to the wireless signal information at the receiving ends, whether there is movement of a person or object around a vehicle comprises:

   determining whether the wireless signal information at one or more receiving ends reaches the receiving ends earlier or later than expected; and
   determining that there is movement of a person or object around the vehicle if there is wireless signal information at one or more receiving ends arrives earlier or later than expected.

3. The method according to claim 1, after the determining, according to the wireless signal information at the receiving ends, whether there is movement of a person or object around a vehicle, the method further comprises:

   automatically initiating the vehicle image capture function, and acquiring image information around the vehicle if it is determined that there is movement of a person or object around the vehicle; and
   determining, according to the image information around the vehicle, whether the movement is caused by a person or an object.

4. The method according to claim 3, wherein after the determining, according to the image information around the vehicle, whether the movement is caused by a person or an object, the method further comprises:

   acquiring pre-stored photo information of a vehicle owner if it is determined that a person is moving around the vehicle; and
   determining, according to the vehicle owner photo information and the image information around the vehicle, whether the vehicle owner is approaching the vehicle.

5. The method according to claim 4, wherein after the determining, according to the vehicle owner photo information and the image information around the vehicle, whether the vehicle owner is approaching the vehicle, the method further comprises:
   activating a vehicle system preheating function if it is determined that the vehicle owner is approaching the vehicle, wherein the vehicle system preheating function comprises a vehicle self-check function or a vehicle welcome function.

6. The method according to claim 1, wherein the executing a corresponding vehicle monitoring function comprises:

    automatically activating a dashcam, and recording the movement of a person or object around the vehicle; and automatically turning off the dashcam and stopping the recording after determining, according to the wireless signal information at the receiving ends, that no person or object moves around the vehicle.

7. The method according to any one of claims 1 to 6, wherein the wireless signal is an ultra-wideband (UWB) wireless signal, for accurately and efficiently determining whether there is movement of a person or object around the vehicle.

8. A wireless signal-based vehicle sensing device, comprising:

    a wireless signal information acquisition module configured to continuously acquire wireless signal information at a plurality of receiving ends on a premise that a plurality of sending ends continuously transmit wireless signals to the plurality of receiving ends at a predetermined time;
    a movement detection module configured to determine, according to the wireless signal information at the receiving ends, whether there is movement of a person or object around a vehicle; and
    an execution function module configured to execute a corresponding vehicle monitoring or risk early warning function if determined that there is movement of a person or object around the vehicle.

9. A storage medium, wherein a computer program is stored in the storage medium, and the computer program is configured to, when running, execute the method according to any one of claims 1 to 7.

10. An electronic device, comprising a processor and a memory, wherein the memory stores a computer program, and the processor is configured to run the computer program to execute the method according to any one of claims 1 to 7.

UWB radar transmission node ▢ ▢ UWB radar receiving node

UWB radar receiving node ▢ ▢ UWB radar transmission node

Fig. 1

Continuously acquire wireless signal information at multiple receiving ends on a premise that multiple sending ends continuously transmit wireless signals to the multiple receiving ends at a predetermined time — S10

Determine, according to the wireless signal information at the receiving ends, whether there is movement of a person or object around a vehicle — S20

Execute a corresponding vehicle monitoring or risk early warning function if determined that there is movement of a person or object around the vehicle — S30

Fig. 2

Determine whether the wireless signal information at one or more receiving ends arrives earlier or later than expected — S21

Determine that there is movement of a person or object around the vehicle if there is wireless signal information at one or more receiving ends arrives earlier or later than expected — S22

Fig. 3

UWB frame transmission          UWB frame reception

Reflected signal 1

Reflected signal 2

Incoming signal 1

Incoming signal 2

Reflector

$\theta$

$\Delta x$

Reflector

Fig. 4

Automatically activate a dashcam, and record movement of a person or object around the vehicle — S31

Automatically turn off the dashcam and stopping the recording after determining, according to the wireless signal information at the receiving ends, that no person or object moves around the vehicle — S32

Fig. 5

Wireless signal-based vehicle sensing device

301

Wireless signal information acquisition module

302

Movement detection module

304

Vehicle system preheating module

303

Execution function module

Fig. 6

Fig. 7

## INTERNATIONAL SEARCH REPORT

| | International application No. |
|---|---|
| | **PCT/CN2023/122376** |

### A. CLASSIFICATION OF SUBJECT MATTER

H04W4/40(2018.01)i

According to International Patent Classification (IPC) or to both national classification and IPC

### B. FIELDS SEARCHED

Minimum documentation searched (classification system followed by classification symbols)

IPC:H04W,H04L,G08B,G01S,B60Q,B60R

Documentation searched other than minimum documentation to the extent that such documents are included in the fields searched

Electronic data base consulted during the international search (name of data base and, where practicable, search terms used)

CNTXT, ENTXTC, EXTXT, VEN: 车, 人, 物, 监控, 检测, 探测, 感知, 信号, 无线, 雷达, 发送, 接收, 延迟, 时延, 时间, vehicle, car, obstacle, detect+, signal, UWB, wireless, radar, send, receive, delay

### C. DOCUMENTS CONSIDERED TO BE RELEVANT

| Category* | Citation of document, with indication, where appropriate, of the relevant passages | Relevant to claim No. |
|---|---|---|
| PX | CN 115915064 A (QINGYAN ZHIXING (BEIJING) TECHNOLOGY CO., LTD.) 04 April 2023 (2023-04-04) description, paragraphs 54-115, and claims 1-10 | 1-10 |
| Y | CN 114627572 A (SHENZHEN LAUNCH TECH CO., LTD.) 14 June 2022 (2022-06-14) description, paragraphs 46-76 | 1-10 |
| Y | CN 115151839 A (HUAWEI TECHNOLOGIES CO., LTD.) 04 October 2022 (2022-10-04) description, paragraphs 51-56 | 1-10 |
| Y | CN 109118693 A (BEIJING WANGMA TECHNOLOGY CO., LTD.) 01 January 2019 (2019-01-01) description, paragraphs 40-87 | 1-10 |
| Y | CN 1591040 A (FUJITSU TEN LTD.) 09 March 2005 (2005-03-09) description, pages 4-6 | 1-10 |
| A | CN 113569698 A (SAIC-GM-WULING AUTOMOBILE CO., LTD.) 29 October 2021 (2021-10-29) entire document | 1-10 |

☐ Further documents are listed in the continuation of Box C.　　☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 December 2023** | **22 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/122376**

| Patent document cited in search report | | | Publication date (day/month/year) | Patent family member(s) | | | Publication date (day/month/year) |
|---|---|---|---|---|---|---|---|
| CN | 115915064 | A | 04 April 2023 | None | | | |
| CN | 114627572 | A | 14 June 2022 | None | | | |
| CN | 115151839 | A | 04 October 2022 | WO | 2021168712 | A1 | 02 September 2021 |
| | | | | EP | 4099053 | A1 | 07 December 2022 |
| | | | | US | 2022404463 | A1 | 22 December 2022 |
| CN | 109118693 | A | 01 January 2019 | None | | | |
| CN | 1591040 | A | 09 March 2005 | US | 2005046606 | A1 | 03 March 2005 |
| | | | | JP | 2005077302 | A | 24 March 2005 |
| CN | 113569698 | A | 29 October 2021 | None | | | |

Form PCT/ISA/210 (patent family annex) (July 2022)